# EUROPÄISCHE PATENTANMELDUNG

(11) **EP 2 857 278 A1**
(43) Veröffentlichungstag der Anmeldung: **08.04.2015**
(21) Anmeldenummer: 14187800.9
(22) Anmeldetag: 06.10.2014
(51) Int. Cl.: B62B 3/02, B62B 3/10

(54) **Transporteinrichtung**

(30) Priorität: 07.10.2013 DE 102013111089
(71) Anmelder: Karl Miller Gmbh & Co KG, 88486 Kirchberg (DE)
(72) Erfinder:
(74) Vertreter: Hutzelmann, Gerhard

(57) **Zusammenfassung**

Flexible Transport- und Lagereinrichtung für Gegenstände und Gruppen von Gegenständen, die als Rohrsystem aufgebaut ist, wobei die Rohre (131) gesteckt sind und durch einen sogenannten Windverband nebeneinander und/oder hintereinander angeordnete Rohre (131) versteift und stabilisiert sind, wobei der Windverband durch auf die Rohre gesteckte Verbindungsteile hergestellt wird.

## Beschreibung

Die Erfindung bezieht sich auf eine flexible Transport- und Lagereinrichtung für Gegenstände und Gruppen von Gegenständen, die als Rohrsystem aufgebaut ist

Hiervon ausgehend liegt der Erfindung die Aufgabe zugrunde, die Transport- und Lagereinrichtung so auszugestalten, daß die Gegenstände einen sicheren Halt erfahren, die Gegenstände übersichtlich angeordnet, leicht und in der richtigen Reihenfolge entnommen werden können und platzsparend angeordnet sind, sowie die Transport- und Lagereinrichtung eine sehr große Stabilität bei höchster Flexibilität aufweist.

Diese Aufgabe wird gemäß der Erfindung dadurch gelöst, daß die Rohre gesteckt sind und durch einen sogenannten Windverband nebeneinander und/oder hintereinander angeordnete Rohre versteift und stabilisiert sind, wobei der Windverband durch auf die Rohre gesteckte Verbindungsteile hergestellt wird.

Durch den Einsatz eines Windverbandes werden die Rohre zueinander und in-sich stabilisiert und versteift. Es wird eine sehr stabile Konstruktion geschaffen, die hoch belastbar ist.

Sehr vorteilhaft ist es erfindungsgemäß auch, wenn eine Tragplatte vorgesehen ist, wobei auf der Unterseite der Tragplatte Rollen, Füße, Stapleraufnahmen oder dergleichen angeordnet sein können, und wobei über die Tragplatte eine Vielzahl von Durchbrechungen und/oder Gewindebohrungen verteilt angeordnet sind, wobei im Bereich der Seitenkanten der Tragplatte Wangen vorgesehen sein können, die nach unten ragen und die wiederum ebenfalls mit Durchbrechungen und/oder Gewindebohrungen ausgerüstet sein können, die ebenfalls in einem vorgegebenen Raster angeordnet sein können, und daß in den Durchbrechungen und/oder Gewindebohrungen Halte- bzw. Sicherungsmittel für die Gegenstände lösbar befestigt sind und daß die Rohre in die Durchbrechungen einsteckbar ausgebildet sind.

Hierdurch wird den Gegenständen ein sehr guter Halt vermittelt. Darüber hinaus ist - da die Halte- bzw. Sicherungsmittel individuell einstellbar sind - eine optimale Platzierung der Gegenstände ermöglicht.

Als besonders günstig hat es sich erwiesen, wenn der Windverband als Strebe, Tafel, Platte oder Wanne ausgebildet ist und Aufnahmen für die Rohre aufweist.

Damit wird eine sehr gute Stabilisierung der Anordnung erzielt.

Dabei ist es sehr vorteilhaft, wenn die Aufnahmen für die Rohre als ausgebogene Laschen ausgebildet sind.

Hierdurch wird mit minimalem Materialeinsatz eine sehr gute Verbindung zwischen Windverband und Rohren hergestellt.

Erfindungsgemäß ist es ebenfalls sehr vorteilhaft, wenn jeder Windverband an wenigstens zwei Rohren wenigstens jeweils zweimal angreift.

Damit wird eine sehr hohe Stabilität erreicht.

Eine weitere sehr vorteilhafte Ausgestaltung der Erfindung liegt vor, wenn die Rohre aus Innenrohren und Außenrohren zusammengesetzt sind.

Hierbei dienen die Außenrohre als Abstandhalter zwischen Aufnahmen, Windverbänden oder dergleichen, die Innenrohre dagegen stellen die Verbindung her.

Äußerst vorteilhaft ist es erfindungsgemäß auch, wenn Steckbehälter vorgesehen sind, die aus einem Boden und separaten Seitenwänden in unterschiedlichen Höhen aufgebaut sind.

Hierdurch lassen sich je nach Bedarf verschiedenste Behälter erstellen.

Eine weitere, ebenfalls sehr vorteilhafte Fortbildung der Erfindung liegt auch vor, wenn in die Rohre einhängbare Aufnahmen zur Aufnahme von Gütern vorgesehen sind, wobei die Aufnahmen jeweils spezifisch auf das Gut abgestimmt sein können.

Hierdurch wird eine an die jeweiligen Güter angepasste Lager- und Transportmöglichkeit geschaffen.

Ebenfalls sehr vorteilhaft ist es, wenn mehrere Aufnahmen nebeneinander und/oder übereinander angeordnet sind.

Damit wird der zur Verfügung stehende Raum optimal ausgenutzt.

Sehr vorteilhaft ist es erfindungsgemäß auch, wenn Durchsteckböden vorgesehen sind, die in einem Raster oder anderweitig angeordnete Durchbrechungen aufweisen.

In diese Durchbrechungen lassen sich Güter sehr einfach einstecken und so sicher und beschädigungsfrei lagern.

Weiterhin hat es sich als sehr vorteilhaft erwiesen, wenn Aufnahmeschienen oder Aufnahmewinkel zur Aufnahme von Rohren vorgesehen sind, wobei diese Schienen oder Winkel auf die Grundplatte oder eine Aufnahme aufschraubbar und/oder in Rohre einhängbar ausgebildet sein können.

Damit lassen sich Rohre für den Aufbau der erfindungsgemäßen Einrichtung sehr gut und platzsparend lagern. Die Verwendung für andere in diese Aufnahmen passende Güter ist denkbar.

Eine weitere erfindungsgemäß sehr vorteilhafte Ausgestaltung liegt vor, wenn sogenannte Palettenecken bzw. Palettenzwischenstücke vorgesehen sind, die mit einem Ansatz in Ausnehmungen einsteckbar ausgebildet sind und eine oder mehrere Verdrehsicherungen aufweisen können, wobei die Verdrehsicherungen als weitere Ansätze ausgebildet sein können, die in weitere Ausnehmungen eingreifen.

Auf diese Art und Weise können Befestigungen geschaffen werden, die Paletten oder andere, eine Grundfläche einnehmende Güter sicher zu fixieren vermögen. Die Palettenecken bzw. Palettenzwischenstücke sind dabei verdrehsicher ausbildbar.

Eine sehr vorteilhafte Fortbildung der Erfindung liegt auch vor, wenn Einhängeschienen für Boxen oder dergleichen vorgesehen sind.

Hierdurch lassen sich Sichtlagerboxen aber auch Waren platzsparend und übersichtlich sicher befestigen.

Sehr vorteilhaft ist es erfindungsgemäß auch, wenn Aufnahmen für Rollen oder dergleichen vorgesehen sind, wobei die Aufnahmen mittels Laschen in Rohre einhängbar ausgebildet sind und wobei diese für Längs- oder Quereinhängung vorgesehen sein können.

Damit lassen sich in die Vorrichtung auch abzurollende Güter integrieren.

Eine weitere, äußerst vorteilhafte Ausgestaltung der Erfindung liegt auch vor, wenn mehrere Einrichtungen miteinander verbindbar sind.

Damit lassen sich auch größere Einheiten aufbauen.

Erfindungsgemäß hat es sich auch als sehr vorteilhaft erwiesen, wenn ein Element der Einrichtung derart ausgebildet ist, daß es mehrere Funktionen erfüllt.

Hierdurch kann mit einem einzigen Element ein Mehrfachnutzen erreicht werden.

Weiterhin ist es erfindungsgemäß sehr vorteilhaft, wenn die Vorrichtung an ihrer Unterseite mit Fahrrollen, Standfüßen oder dergleichen ausgerüstet ist, wobei diese anbaubar, ausklappbar oder ausschraubbar ausgebildet sein können.

Durch eine variable Anbringung von Fahrrollen, Standfüßen oder dergleichen können diese bei Nichtgebrauch in eine nicht störende Position zu bringen. Zudem ist es in diesem Zusammenhang denkbar, daß hiermit eine Anpassung an unterschiedliche Untergründe oder Einsatzzwecke erfolgen kann.

Äußerst vorteilhaft ist es erfindungsgemäß auch, wenn eine Zugdeichsel zum Verbinden zweier erfindungsgemäßer Einrichtungen vorgesehen ist, die jeweils in einer Durchbrechung der jeweiligen Einrichtung einhängbar ausgebildet ist.

Hierdurch lassen sich Züge aus einzelnen Einrichtungen bilden.

Dabei hat es sich als sehr vorteilhaft erwiesen, wenn die Zugdeichsel an einem oder beiden Enden gegen Verdrehen in der Durchbrechung gesichert ist.

Dadurch wird ein definiertes Kurvenverhalten erzielt.

Äußerst vorteilhaft ist es erfindungsgemäß auch, wenn die Zugdeichsel ein Gelenk aufweist, welches mindestens einen Freiheitsgrad aufweist, vorzugsweise drei Freiheitsgrade, wobei wenigstens ein Teil der Freiheitsgrade eingeschränkt sein kann.

Damit kann der Drehpunkt zwischen zwei Einrichtungen auch in den Zwischenraum zwischen zwei Einrichtungen gelegt werden. Durch weitere Freiheitsgrade, vor allem in vertikaler Richtung kann auch ein Ausgleich bei unebenen Untergründer erreicht werden.

Erfindungsgemäß hat es sich als besonders vorteilhaft erwiesen, wenn die Zugdeichsel zweigeteilt ausgebildet ist in eine Anhängekupplung und ein entsprechendes Zugmaul, wobei eine Ausgestaltung vorgesehen sein kann, bei der die Anhängekupplung als Kugelkopfkupplung und das Zugmaul als entsprechendes Gegenstück ausgebildet ist.

Hierdurch sind die Einrichtungen sehr leicht voneinander trennbar.

Eine weitere sehr vorteilhafte Ausgestaltung der Erfindung liegt auch vor, wenn eine Aufnahme für ein Querrohr vorgesehen ist, wobei diese Aufnahme ein oder mehr vertikale Rohre aufzunehmen vermag.

Hierdurch lassen sich Kragarme ausbilden, die aus quer liegenden Rohren gebildet werden. Wenn mehrere vertikale Rohre in der Aufnahme vereint sind, wird ein Windverband geschaffen, der in der Lage ist, Biegekräfte in diese mehreren Rohre einzuleiten.

Dabei hat es sich als sehr vorteilhaft erwiesen, wenn eine Rast- oder Arretiereinrichtung und/oder ein Anschlag zur Begrenzung der Einstecklänge des Querrohres und/oder der vertikalen Rohre vorgesehen ist.

Hiermit wird ein zu weites Einstecken ebenso verhindert, wie ein versehentliches Herausrutschen der Querrohre. Zudem erhalten die Querrohre eine definierte Position. Eine weitere sehr vorteilhafte Ausgestaltung liegt vor, wenn zwei Haltelaschen bzw. Öffnungen für das Querrohr und/oder das bzw. die vertikalen Rohre zueinander versetzt angeordnet sind, so daß das jeweilige Rohr bzw. die Aufnahme geneigt angeordnet wird.

Durch die Neigung wird eine nochmals erhöhte Belastbarkeit erzielt. Zudem wird die Neigung zum Herabrutschen von Gegenständen minimiert.

Gemäß einer weiteren Ausgestaltung der Erfindung ist es äußerst vorteilhaft, wenn Bürsten oder dergleichen vorgesehen sind, die einsetzbar und/oder aufsteckbar ausgebildet sein können.

Diese Bürsten können bei Bedarf eingesetzt werden, um einen Anschlag- oder Auflagepunkt für Gegenstände zu schaffen und dabei eine mögliche Beschädigung der Gegenstände zu verhindern.

Dabei ist es sehr vorteilhaft, wenn die Bürsten in Halter oder andere Bauteile einsetzbar bzw. an diesen befestigbar ausgebildet sind.

Hierdurch können diese Bürsten platzsparend angeordnet werden.

Ebenfalls sehr vorteilhaft ist es, wenn die Bürsten auf Rohre, insbesondere auf Querrohre aufsteckbar bzw. an diesen befestigbar ausgebildet sind.

Hierdurch können auf einfache Art und Weise Auflagen geschaffen werden.

In der Zeichnung ist die Erfindung anhand mehrerer Ausführungsbeispiele dargestellt. Dabei zeigen:
- Fig.1: eine Transport- und Lagereinrichtung mit einer Tragplatte, sowie einem darauf aufgebauten Gestell aus Rohren,

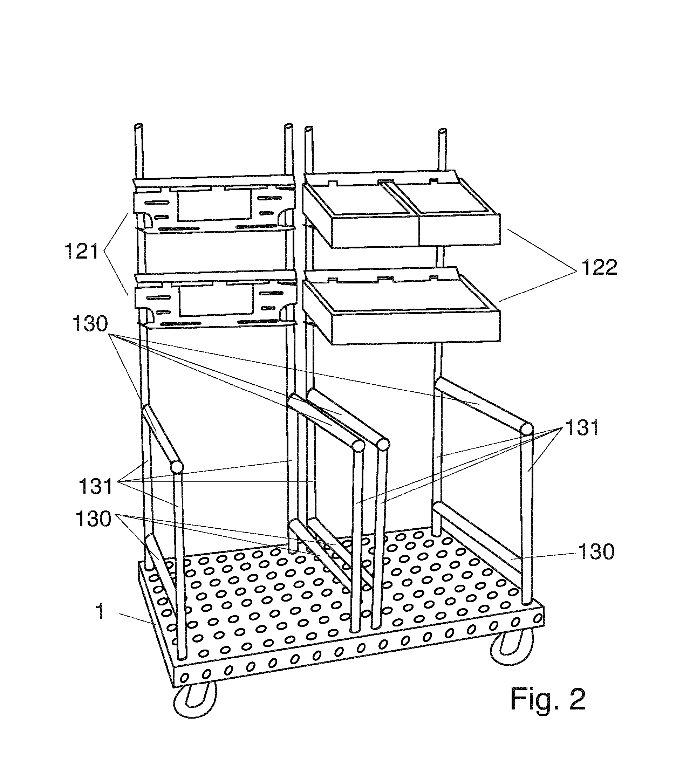

- Fig.2: eine weitere Transport- und Lagereinrichtung, die zudem Einhängehalterungen für Sichtlagerboxen aufweist, die zugleich als Windverband wirken,
- Fig.3: eine dritte Transport- und Lagereinrichtung, die mit weiteren Befestigungs- und Halteteilen ausgerüstet ist,
- Fig.4: ein wannenförmig ausgebildetes Verbindungsteil, welches einen Windverband zwischen vier senkrechten Streben herstellt,
- Fig.5: ein aus mehreren Einzelteilen aufgebautes wannenförmiges Verbindungsteil, welches ebenfalls einen Windverband herstellt,
- Fig.6: eine Einhängehalterung,
- Fig.7: ein wannenförmiges Einhängeteil,
- Fig.8: mehrere Rohre in unterschiedlichen Längen,
- Fig.9: eine weitere Variante einer Aufnahmewanne mit seitlichen Anschlägen,
- Fig.10: ein Grundaufbau einer Tragplatte mit Lagerelementen,
- Fig.11: ein Halter zur Aufnahme von Rollen oder dergleichen,
- Fig.12: derselbe Halter mit eingehängter Rolle,

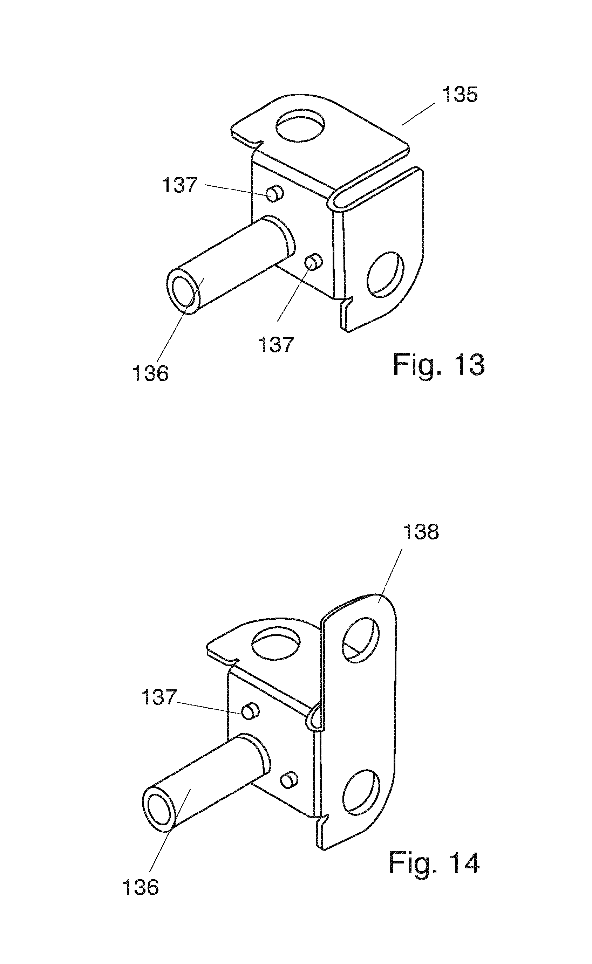

- Fig.13: ein Paletteneck,
- Fig.14: ein Palettenzwischenstück,

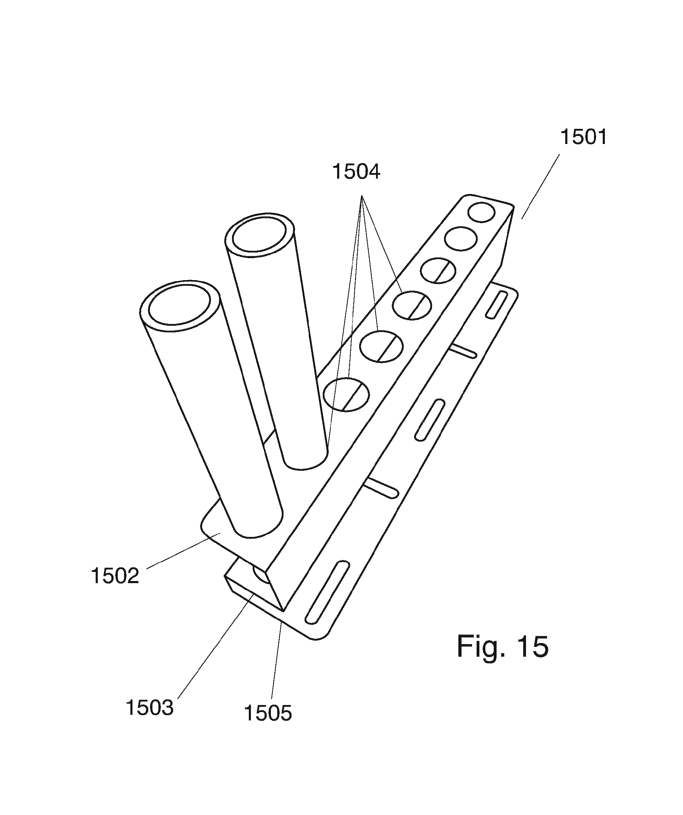

- Fig.15: einen Halter für Rohre,
- Fig.16: eine Einrichtung mit zwei Durchsteckböden,
- Fig.17: eine aus den erfindungsgemäßen Bauteilen aufgebaute Einrichtung zum Lagern von Stangenmaterial,
- Fig.18: eine weitere Einrichtung zum Lagern vieler verschiedener Stangenmaterialien,
- Fig.19: eine Seitenwand, die in ihren horizontal verlaufenden Abschnitten Öffnungen aufweist,
- Fig.20: eine Tragplatte, die mit ausziehbaren Stellfüßen ausgerüstet ist,
- Fig.21: eine Tragplatte, die mit ausdrehbaren Stellfüßen ausgerüstet ist,
- Fig.22: eine Tragplatte, die mit ausklappbaren Stellfüßen versehen ist,
- Fig.23: eine Zugdeichsel zum Verbinden zweier Tragplatten,
- Fig.24: eine Zugdeichsel mit Drehgelenk zum Verbinden zweier Tragplatten zu einem Zug,
- Fig.25: eine schaubildliche Darstellung einer mit einem Drehgelenk versehenen Zugdeichsel zur Verbindung zweier Tragplatten,
- Fig.26: eine schaubildliche Darstellung zweier mit einer trennbaren Zugdeichsel verbundenen Tragplatten,
- Fig.27: eine schaubildliche Darstellung eines Kugelkopfes der trennbaren Zugdeichsel,
- Fig.28: eine schaubildliche Darstellung der Zugdeichsel mit Zugmaul,
- Fig.29: eine schaubildliche Darstellung einer Aufnahme für ein Querrohr,
- Fig.30: eine schaubildliche Darstellung der Aufnahme mit eingesetzten vertikalen Rohren und einem Querrohr,
- Fig.31: eine Draufsicht auf eine solche Aufnahme mit eingesetztem Querrohr,
- Fig.32: ein Schaubild einer Halterung mit einer eingesetzten Bürste, und
- Fig.33: ein Schaubild eines Querrohres mit aufgeschobener Bürste.

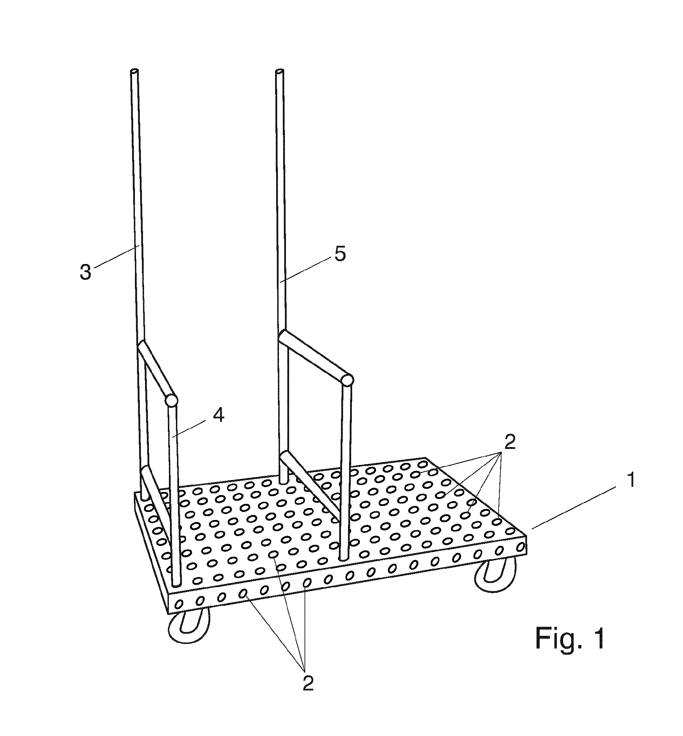

Mit 1 ist in Fig.1 eine Tragplatte bezeichnet, die in einem gleichmäßigen Rastermaß mit Durchbrechungen 2 (Bohrungen) versehen ist. Zusätzlich können noch Gewindebohrungen vorgesehen werden, oder aber Gewindedübel in entsprechende Ausnehmungen eingesetzt werden. Dabei können diese Gewindedübel eingeschnappt, eingepresst oder anderweitig befestigt sein.

Zusätzlich kann ein Verbindungsteil 111 vorgesehen sein, welches mehrere Halte- bzw. Sicherungsmittel 3, 4, 5 aber auch Streben miteinander zu verbinden vermag und diese so stabilisiert und versteift. Es ergibt sich ein Windverband, so daß die Halte- bzw. Sicherungsmittel auch Querbelastungen durch beispielsweise Kipp- und Biegekräfte in alle Richtungen aufzunehmen vermögen.

Im dargestellten Ausführungsbeispiel ist das Verbindungsteil 111 wannenförmig ausgebildet, kann aber auch als Platte zur Verbindung von zwei oder mehr Streben miteinander dienen und so einen Windverband bilden.

Mehrere solche Verbindungsteile können über- und nebeneinander angeordnet sein. Die senkrechten Streben, hier in Rohrausführung sind aus inneren Rohren 112 und äußeren Rohren 113 aufgebaut. Die inneren Rohre 112 ragen durch das Verbindungsteil hindurch, wobei dazu in nach außen ragenden Laschen 114 dem Außendurchmesser der inneren Rohre 112 entsprechende Ausnehmungen 115 vorgesehen sind. Die äußeren Rohre dagegen stützen sich an den Laschen 114 ab.

Die Rohre können dabei einen runden Querschnitt aufweisen. Andere Querschnitte sind denkbar.

Der Außendurchmesser der inneren Rohre 112 beträgt in diesem Ausführungsbeispiel achtundzwanzig Millimeter, wohingegen der Außendurchmesser der äußeren Rohre 113 zweiunddreißig Millimeter beträgt. Der Innendurchmesser der äußeren Rohre 113 entspricht dem Außendurchmesser der inneren Rohre 112. Andere Durchmesserpaarungen sind denkbar.

Damit ergibt sich ein sehr stabiler Verband, der aber durch den Einsatz unterschiedlicher Rohrlängen in unterschiedlichsten Höhen angeordnet werden kann.

Durch das Verbindungsteil 111 wird der gesamte Aufbau sehr stabil und belastbar.

Dieses Verbindungsteil 111 kann dabei auch als Ablage ausgebildet werden, wobei sich eine wannenförmige Ausbildung als besonders vorteilhaft erwiesen hat, da dann Gegenstände einfach hineingelegt werden können.

Es ist aber auch denkbar, daß spezielle Aufnahmewannen 116 auf die Verbindungsteile 111 aufgesetzt oder in diese eingehängt werden, die dann ihrerseits, quer oder längs zur Ausrichtung der Verbindungsteile 111 die Aufstapelung von Sortier- und Kleinteileboxen ebenso ermöglichen, wie die direkte Lagerung von Gütern.

Es können auch Halteschienen 121 vorgesehen werden, in die Gegenstände eingehängt werden können.

Besonders können Behälter, Lagerboxen, insbesondere Sichtlagerboxen 122 oder dergleichen in solche Halteschienen 121 eingehängt werden, wodurch sich eine sichere, platzsparende aber dennoch leicht zugängliche Aufbewahrungsmöglichkeit für Material ergibt.

Diese Halteschienen sind bezüglich ihrer Höhe variabel. Besonders vorteilhaft ist es jedoch, wenn diese auf die Höhe der Verbindungsteile 111 abgestimmt sind, da diese dann miteinander kombiniert werden können.

Die Halteschienen 121 bilden dabei selbst einen Windverband zwischen zwei oder mehr nebeneinander angeordneten Streben.

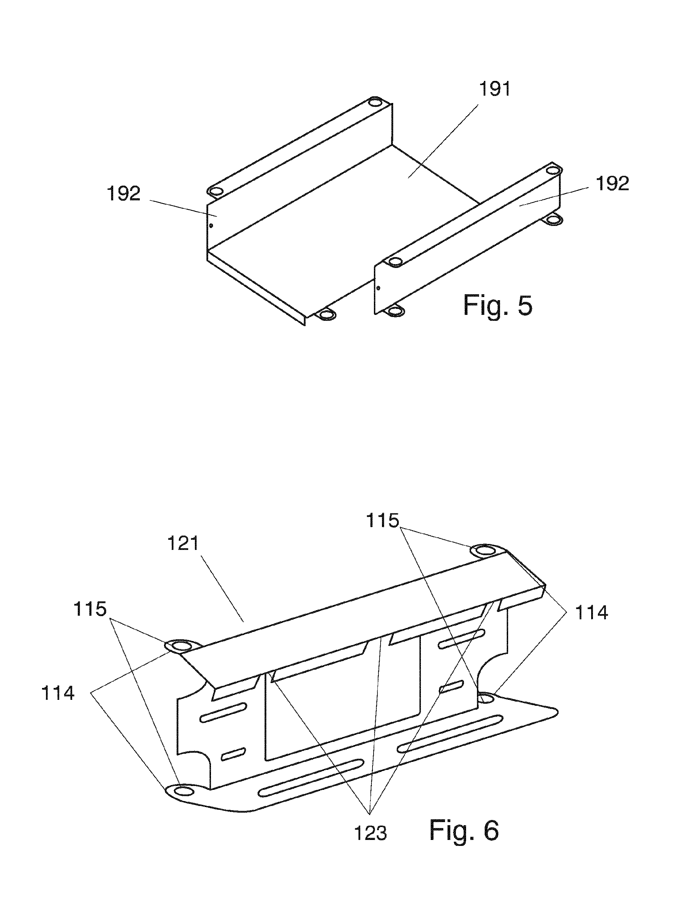

Die Verbindungsteile 111 können auch selbst aus mehreren Einzelteilen aufgebaut sein. Wie in Fig. 5 dargestellt, ist ein Aufbau aus einem Bodenteil 191 und Seitenwänden 192 denkbar. Insbesondere die Seitenwände 192 können in unterschiedlichen Höhen vorgesehen sein, so daß unterschiedlich hohe Verbindungsteile 111 geschaffen werden können. Auch ist es denkbar, daß mehrere Seitenwände 192 übereinander angeordnet werden.

Hinsichtlich der Längserstreckung der Halteschienen 121 ist eine variable Teilung erwünscht, wie sie durch Unterbrechungen 123 in den Figuren ausgebildet ist.

Die Halteschienen 121 bilden ebenfalls einen Windverband.

Eine besonders gute Stabilität ergibt sich, wenn im unteren Bereich, jedoch mit Abstand zur Tragplatte 1 Querstreben 130 vorgesehen sind, die zwei senkrechte Streben 131 miteinander verbinden, wodurch die senkrechten Streben 131 eine erhöhte Stabilität erhalten, da Kipp und Biegekräfte nicht nur über die kurze Einstecklänge der senkrechten Streben 131 in die Tragplatte 1 eingeleitet werden müssen.

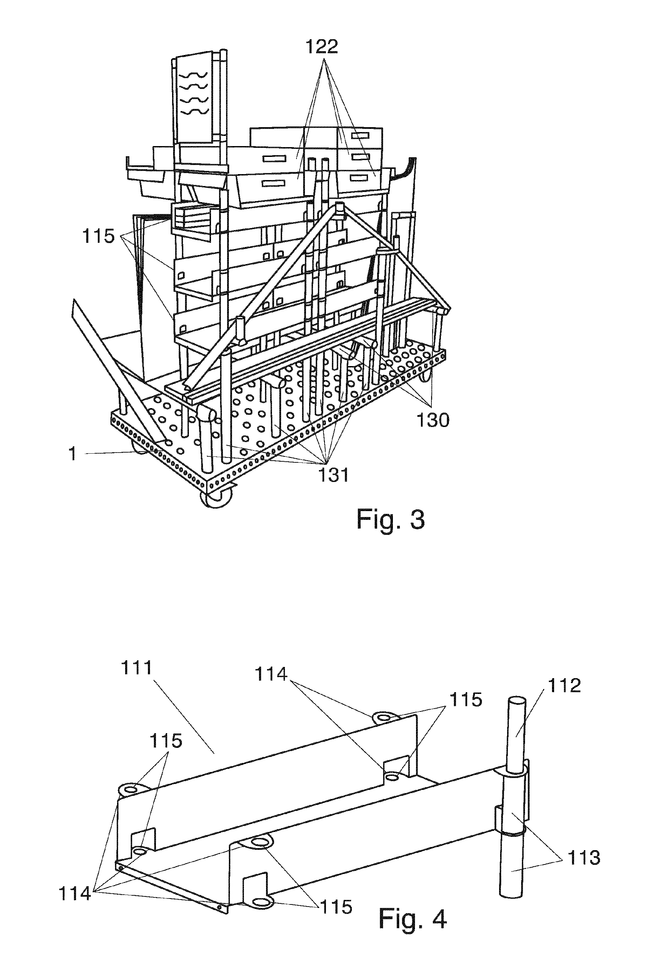

Wie in Fig. 3 dargestellt, können auf diese Art und Weise sehr komplexe Strukturen aufgebaut werden, die in ergonomischer Höhe den Transport und die Zur-Verfügung-Stellung von Werkstoffen in der Fertigung, Werkzeug usw. ermöglichen. Zudem können komplexe Lagereinrichtungen aufgebaut werden.

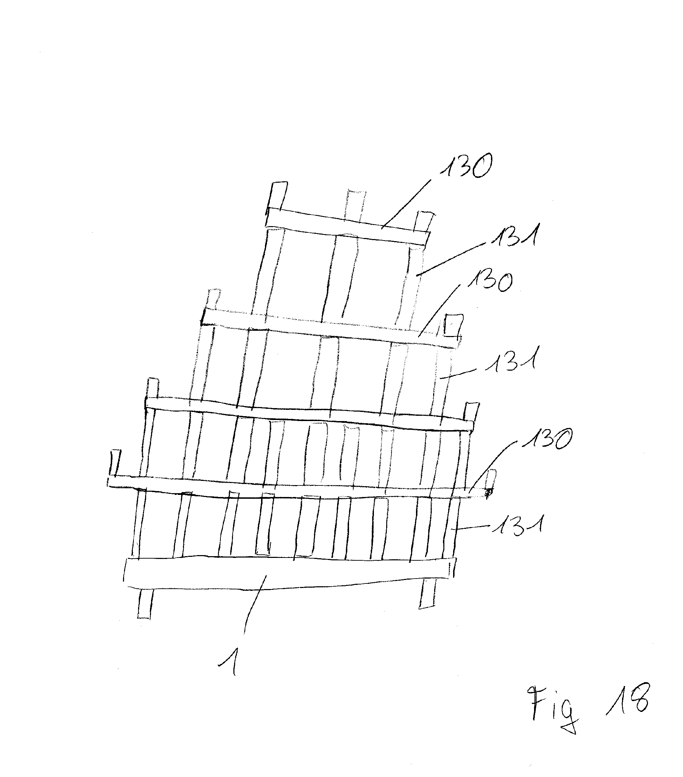

Ein Beispiel für eine komplexe Lagereinrichtung ist in Fig. 18 dargestellt. Dort wird aus dem erfindungsgemäßen System ein Lager für Stahlprofile gebildet. Dieses Beispiel zeigt einerseits die Flexibilität und andererseits die Stabilität des Systems. Die Stahlprofile wiegen zusammen etliche Tonnen. Zur Bildung einer solchen komplexen Lagereinrichtung können mehrere Tragplatten 1 miteinander verbunden werden, oder aber auch darauf abgestimmte, große Tragplatten eingesetzt werden.

Die an den Längsseiten angeordneten Ablagen für Profile können dabei auch teilweise offen oder gar als Kragarm-Ablagen ausgebildet sein.

Nicht dargestellte Stapleraufnahmen und auch Deichseladapter können bei Bedarf ebenfalls in die Tragplatte 1 eingehängt und an der benötigten Stelle befestigt werden. Die Tragplatten 1 sind dadurch sehr universell verwendbar.

Zusätzlich können Palettenecken 135 eingesetzt werden, die auf der Tragplatte 1 angeordnete Gegenstände am Herunterrutschen hindern. Ist die Tragplatte auf Standard-Palettenmaß ausgerichtet, können die Ecken 135 auch in den Ecken der Traplatte 1 angeordnet werden, um eine darauf abgestellte Palette zu sichern. Die Palettenecken 135 weisen einen Haltezapfen 136 auf, der in eine Bohrung der Tragplatte 1 eingesetzt wird. Zusätzlich können noch als Nasen 137 ausgebildete Verdrehsicherungen vorgesehen sein, die entweder in eine weitere Bohrung der Tragplatte 1 eingreifen, ober aber in Ausnehmungen, in die Gewindedübel eingesetzt sind oder eingesetzt werden können.

Genauso können Palettenzwischenteile 138 vorgesehen sein, die an Stoßstellen zweier Paletten vorgesehen werden können.

Diese Palettenecken 135 und Palettenzwischenteile 138 müssen dabei nicht nur für Paletten vorgesehen werden, sondern können auch für jegliche Güter eingesetzt werden, die eine Grundfläche aufweisen und am Herunterrutschen von der Tragplatte 1 gehindert werden sollen.

Die an der Unterseite der Tragplatte 1 angeordneten Fahrrollen können ebenfalls modular und auswechselbar ausgebildet sein. Je nach Einsatzzweck können unterschiedliche Rollen angebracht werden. So sind normale Kunststoffrollen, Stahlrollen, gummiunumantelte Rollen aber auch Spezialanfertigungen denkbar, die als Bockrollen, aber auch als Lenkrollen ausgebildet sein können.

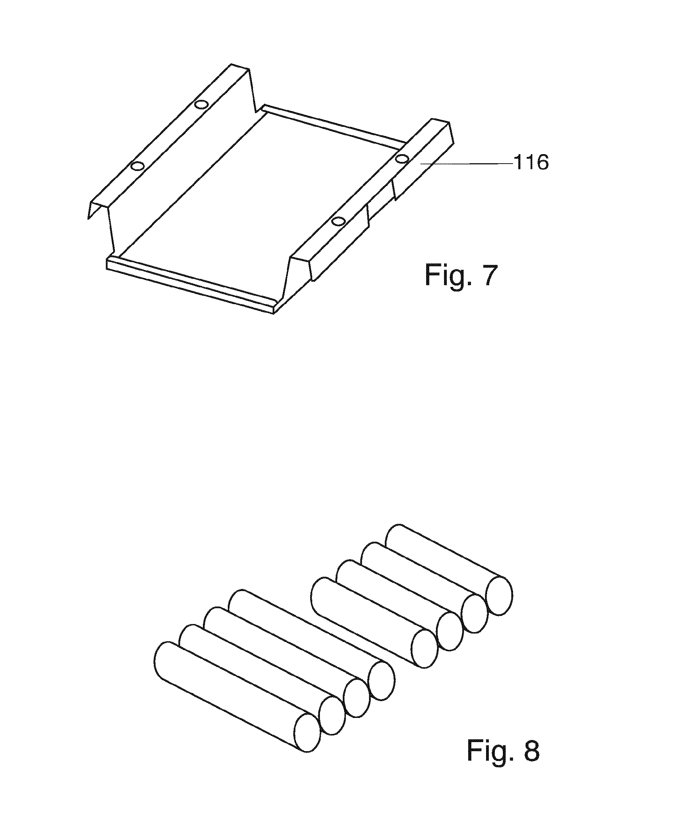

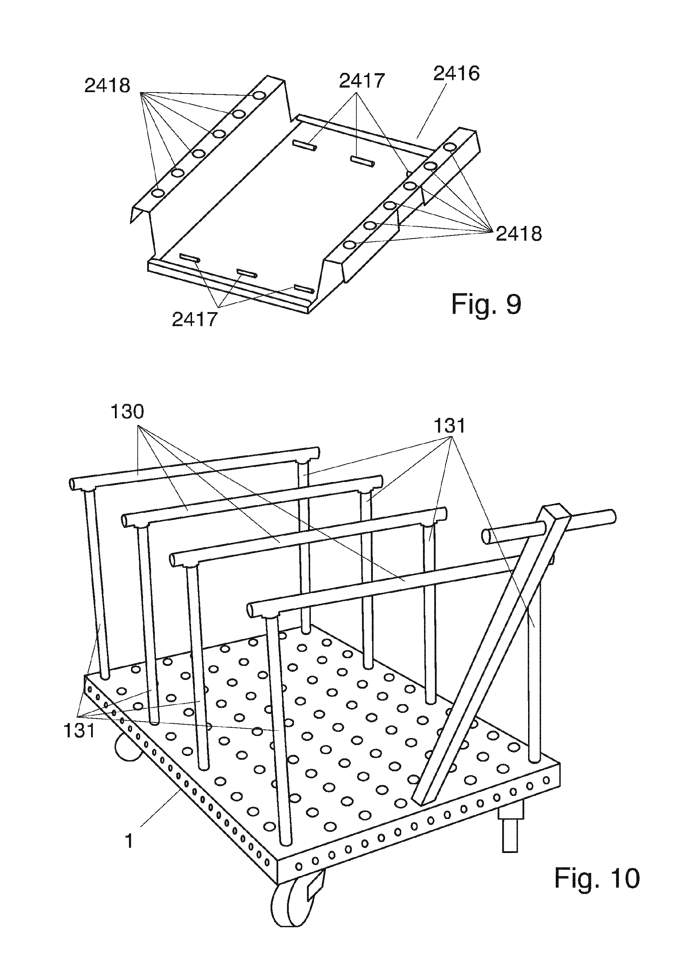

In Fig. 9 ist eine weitere Variante der Aufnahmewanne 116 aus Fig. 7 dargestellt. Diese Aufnahmewanne 2416 ist an den seitlichen Enden mit einer Überhöhung 2417 versehen, die ein versehentliches Herabrutschen der aufgestapelten Sortier- und Kleinteileboxen verhindert. Zusätzlich sind Durchbrechungen 2418 vorgesehen, durch die Rohre 112/113 hindurchgreifen können, oder aber Befestigungselemente für die Sortier- und Kleinteileboxen oder dergleichen einzugreifen vermögen. In diesem Ausführungsbeispiel sind diese Durchbrechungen 2418 als kreisförmige Durchbrechungen ausgeführt, die in einem der Tragplatte 1 entsprechenden Rastermaß angeordnet sind.

In Fig. 10 ist eine weitere Variante eines Standardaufbaus dargestellt. Hierbei sind jeweils zwei senkrechte Streben 131 mit einer Querstrebe 130 miteinander verbunden. Mehrere solcher Kombinationen sind auf der Tragplatte 1 vorgesehen, so daß sich eine Lagerebene ergibt.

Die Querstreben 130 können dabei mit einem rutschhemmenden Belag versehen sein.

Unterschiedliche Höhen sind je nach Einsatzzweck ebenso denkar, wie auch die Kombination unterschiedlicher Höhen auf einer einzigen Tragplatte 1.

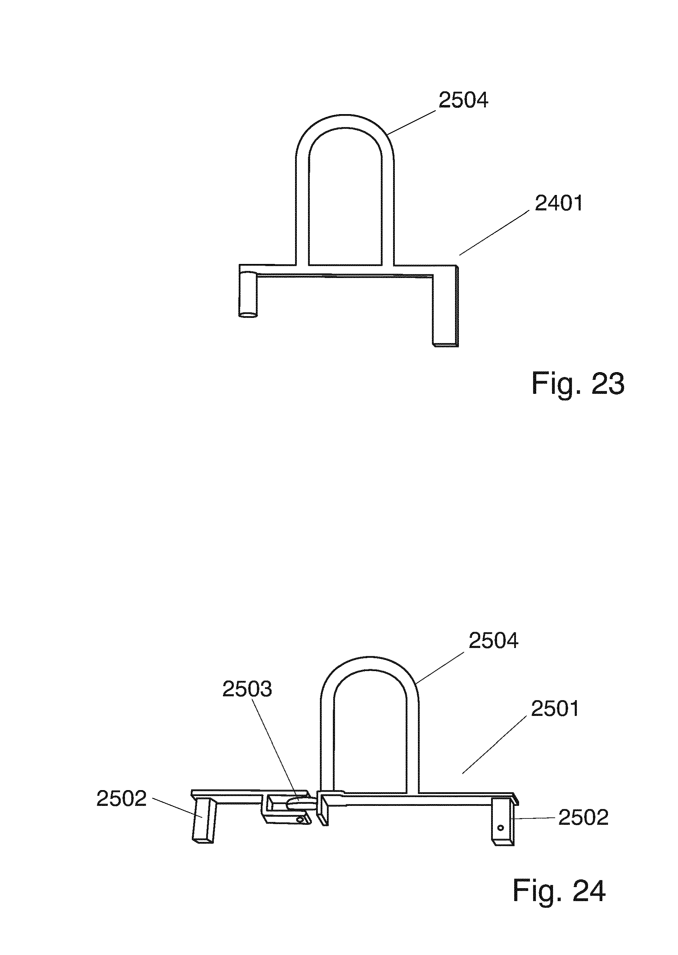

Das hier beschriebene System ist auch in Zügen einsetzbar. Durch einfach einhängbare Deichseln, die beispielsweise an ihrem einen Ende drehbar und an ihrem anderen Ende fest stehend eingehängt werden können kann sehr leicht ein solcher Zug zusammengestellt werden. Eine solche Deichsel 2401 ist in Fig. 23 dargestellt. Die Länge der Deichseln ist dabei auf die Länge und Breite der Tragplatten 1 abzustimmen, damit diese spurtreu laufen und sich nicht berühren. Die Deichseln können dabei nicht nur direkt in die Tragplatten 1 eingehängt werden, sondern auch in anbaubare oder fest angeordnete Verbindungselemente eingehängt werden.

In diesem Zusammenhang sind auch Deichseln 2501 denkbar, die an beiden Seiten eckige Ansätze 2502 aufweisen, so daß diese feststehend eingehängt werden können. Eine solche Deichsel 2501 ist mit einem Gelenk 2503 ausgerüstet, welches zumindest auf eine Drehbewegung um einer Achse ausgelegt ist und die Tragplatten zu einem beweglichen Zug zu verbinden vermag. Weitere Freiheitsgrade, die auch beschränkt sein können, sind denkbar. Auf den Deichseln 2401 und 2501 kann ein Bügel 2504 angeordnet sein, an dem die Deichsel ergriffen werden kann. Zudem kann dieser Bügel 2504 auch als Abweiser dienen.

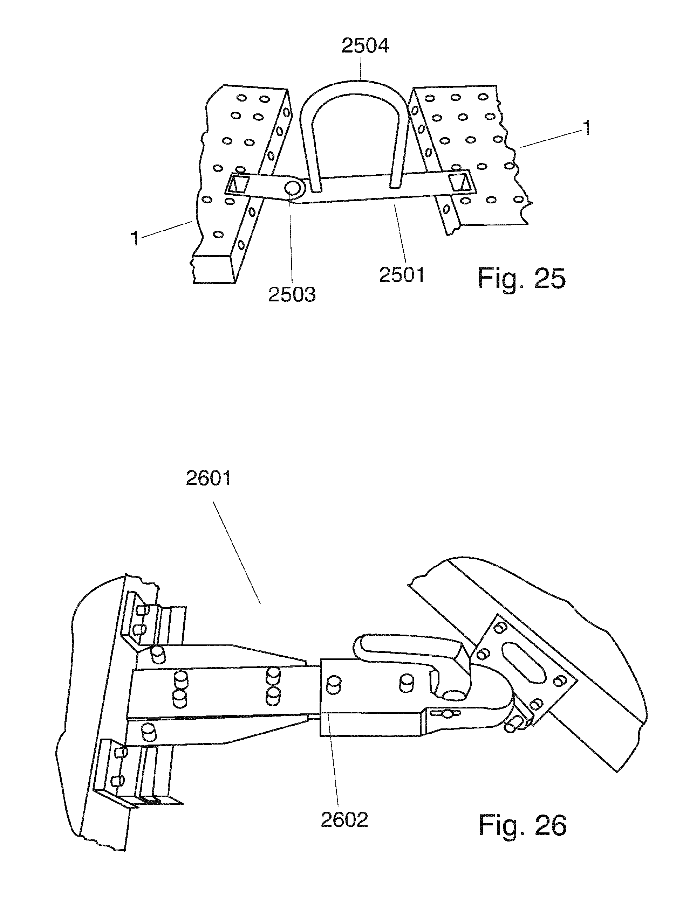

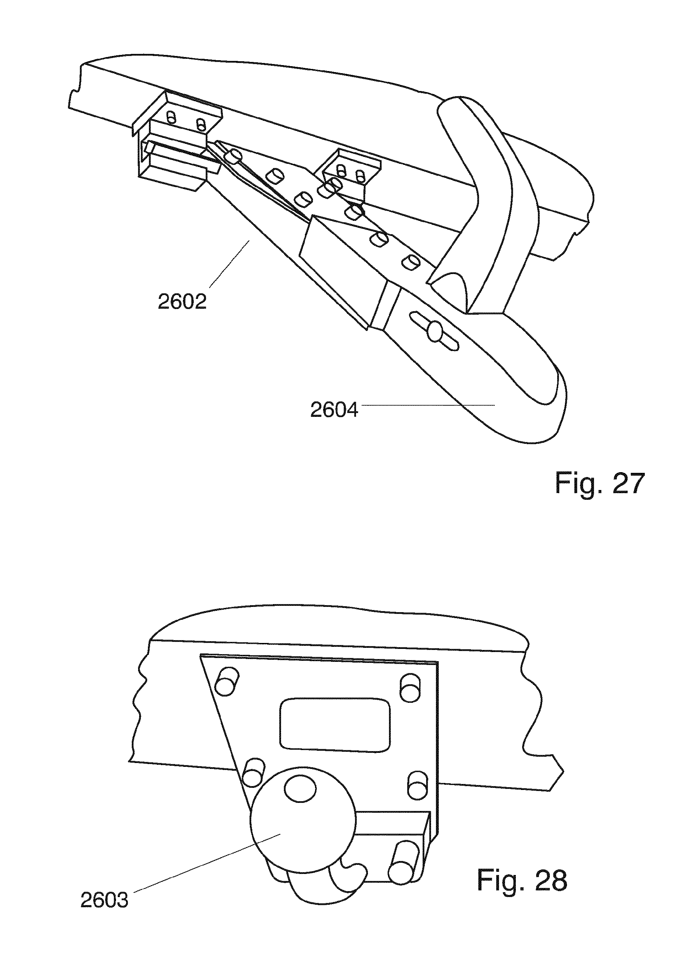

Wie in den Fig. 26, 27 und 28 dargestellt sind auch trennbare Deichseln 2601 denkbar, die aus der eigentlichen Zugdeichsel 2602 und einem Kupplungskopf 2603 bestehen. Der Kupplungskopf 2603 kann dabei als Kugelkopfkupplung ausgebildet sein, wie dies in den Figuren dargestellt ist. Die Zugdeichsel 2602 ist mit einem entsprechenden Zugmaul 2604 ausgerüstet, welches sich lösbar auf den Kugelkopf 2603 aufsetzen lässt. Die Zugdeichsel 2602 kann in vertikaler Richtung klappbar an der Tragplatte befestigt sein. Eine seitliche Beweglichkeit ist aufgrund des im Kugelkopf angeordneten Drehpunktes nicht notwendig.

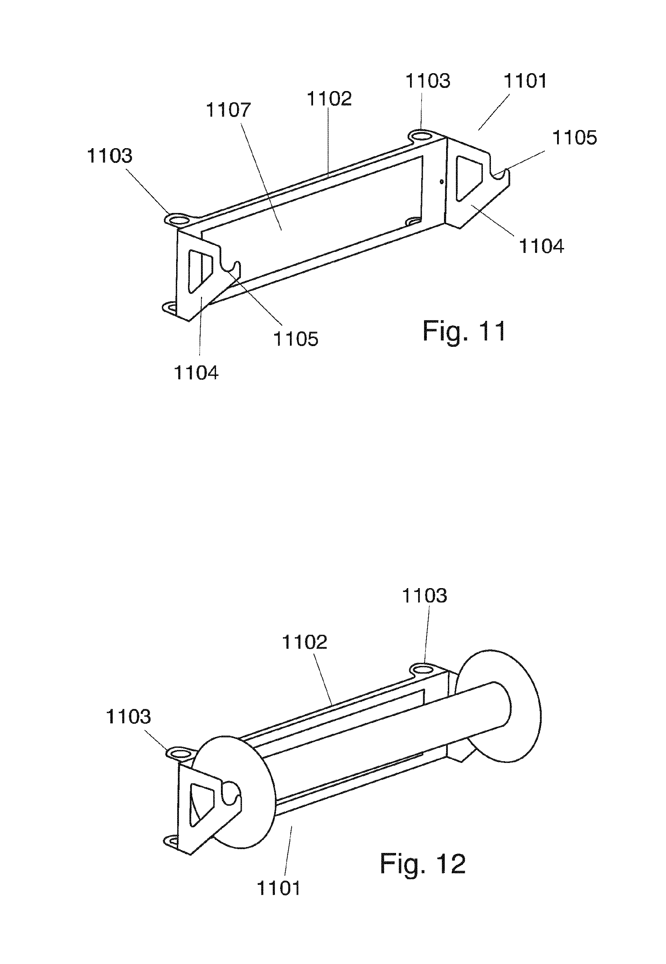

In den Fig. 11 und 12 ist eine Aufnahme 1101 für Rollen, Trommeln oder Spulen dargestellt. Diese ist mit einer Rückwand 1102 ausgerüstet, die mit nach hinten gerichteten Laschen 1103 versehen ist, in die Rohre 131 einzugreifen vermögen. Nach vorne gerichtet sind Arme 1104 vorgesehen, die mit einer Vertiefung 1105 zur Aufnahme einer Achse 1106 dienen. Auf der Achse 1106 kann die Rolle aufgesteckt sein. Es ist aber auch denkbar, daß direkt an der Rolle entsprechende Ansätze vorgesehen sind, die in die Vertiefungen 1105 einzugreifen vermögen.

In der Rückwand 1102 kann eine Ausnehmung 1107 eingebracht sein, die einerseits das Gewicht der Aufnahme 1101 verringert ohne die Stabilität einzuschränken und andererseits auch mehr Freiraum für die Rolle bzw. das darauf aufgewickelte Material schafft.

Es ist auch eine weitere Ausführung denkbar, bei der die Aufnahme zweigeteilt ist. Jede der beiden Aufnahmen weist jeweils einen Arm 1104 auf und wird getrennt mit ein oder zwei Rohren verbunden. Zwischen den beiden Armen 1104 kann eine Trommel oder Spule eingehängt werden.

Solche Aufnahmen sind besonders zur Lagerung von abrollbaren Gütern wie beispielsweise Kabel, Schläuche oder dergleichen geeignet.

Zur Lagerung und zum Transport von rohrförmigen Gegenständen, insbesondere von Einzelteilen, die zum Aufbau von erfindungsgemäßen Einrichtungen geeignet sind, sind an der Tragplatte 1 anschraubbare oder einsteckbare Halterungen 1501 vorgesehen, die im wesentlichen einen S-förmigen Querschnitt aufweisen. Der obere 1502 und mittlere Quersteg 1503 weisen dabei Durchbrechungen 1504 auf, die im vorliegenden Beispiel, angepasst an die eingesetzten Rohre kreisförmig sind. Durch diese Durchbrechungen 1504 werden die zu lagernden Gegenstände eingesteckt und erhalten so die notwendige Befestigung.

Der untere Quersteg 1505 ist mit Schraubenlöchern und Langlöchern versehen, mit deren Hilfe die Halterung 1501 mit der Tragplatte 1 verschraubt werden kann.

Die Durchbrechungen 1504 sind dabei mit geringem Abstand voneinander angeordnet und bieten so die Möglichkeit, daß eine Vielzahl von Gegenständen platzsparend angeordnet werden kann.

Werden zwei Halterungen 1501 mit Abstand nebeneinander auf der Tragplatte 1 angeordnet, so lassen sich auch bügelförmige Rohrkonstruktionen, die als Ablagen für Gegenstände dienen können, platzsparend auf der Tragplatte 1 anordnen.

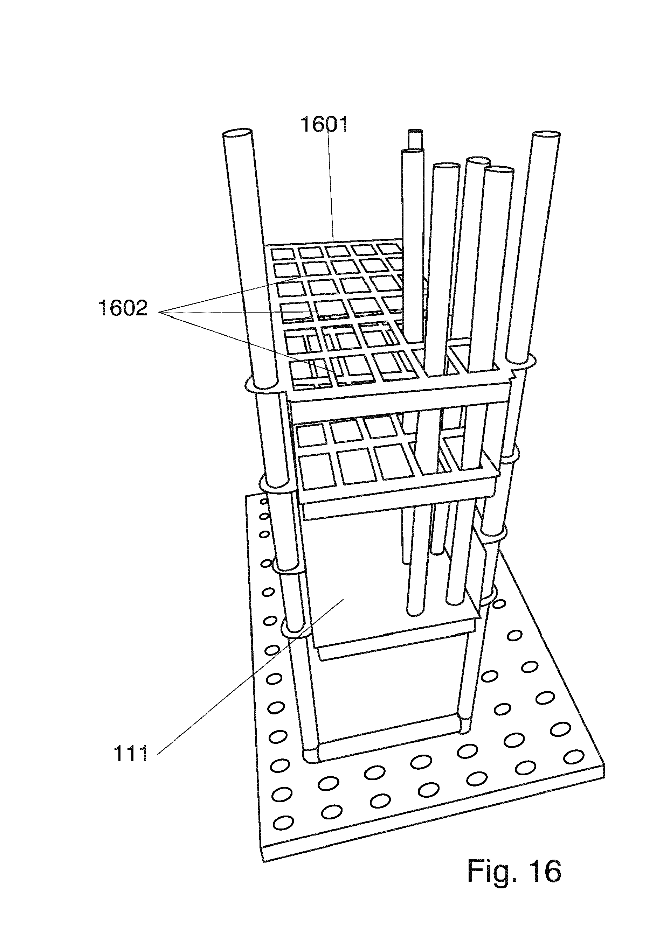

Ebenfalls sind, wie in Fig. 16 dargestellt Durchsteckböden 1601 denkbar, in die Gegenstände eingesteckt werden können. Hierzu sind Durchbrechungen 1602 vorgesehen, die verschiedenste Querschnitte aufweisen können. Im vorliegenden Ausführungsbeispiel sind die Durchbrechungen rechteckig ausgeführt. Durch die Verwendung eines Verbindungsteiles 111, welches in diesem Fall auch rein als Boden ausgeführt sein kann, kann die Einstecklänge begrenzt werden. Die Anordnung von mehreren Durchsteckböden 1601 übereinander ist denkbar und sorgt gerade bei längeren, senkrecht zu lagernden Gegenständen für eine große Stabilität. Zudem wird durch die Durchsteckböden 1601 ebenfalls ein Windverband geschaffen, der die gesamte Einrichtung stabilisiert.

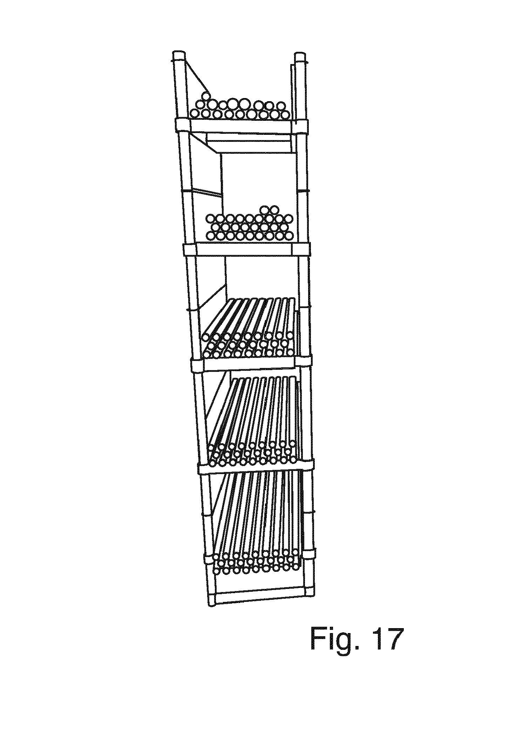

Die Kombination verschiedenster Elemente ist denkbar, wie beispielsweise in Fig. 17 dargestellt. Dort ist am Beispiel der Lagerung von Bügeln und Rohren für die erfindungsgemäße Einrichtung die Flexibilität der Einrichtung gezeigt.

Die Verwendung von Zwischenplatten und Zwischenböden ist ebenso denkbar, wie der Einsatz von weiteren Befestigungsmitteln.

Mehrere, in einem Winkel aufeinander treffende Rohre können beispielsweise mit Klemmschellen aneinander befestigt werden.

Erfindungswesentlich ist auch, daß jedes Element derart ausgebildet sein kann, daß dieses mehrere Funktionen zu erfüllen vermag. In Fig, 19 ist beispielsweise eine Wand 1901 dargestellt, die aus einer vertikalen Wand 1902 und einem horizontal verlaufenden Abschnitt 1903 besteht. Im horizontalen Abschnitt sind neben Aufnahmen 1904 für die Rohre 112 auch Durchstecköffnungen 1905 auf, in die zu lagernde Gegenstände eingesteckt werden können. Zusätzliche Laschen 114 als weitere Befestigungsmöglichkeit für die Rohre 112 sind denkbar.

Weiterhin können auf der Unterseite der Tragplatten, neben oder anstatt von Rollen, auch Standfüße vorgesehen sein, die ausziehbar, ausdrehbar oder ausklappbar ausgebildet sein können.

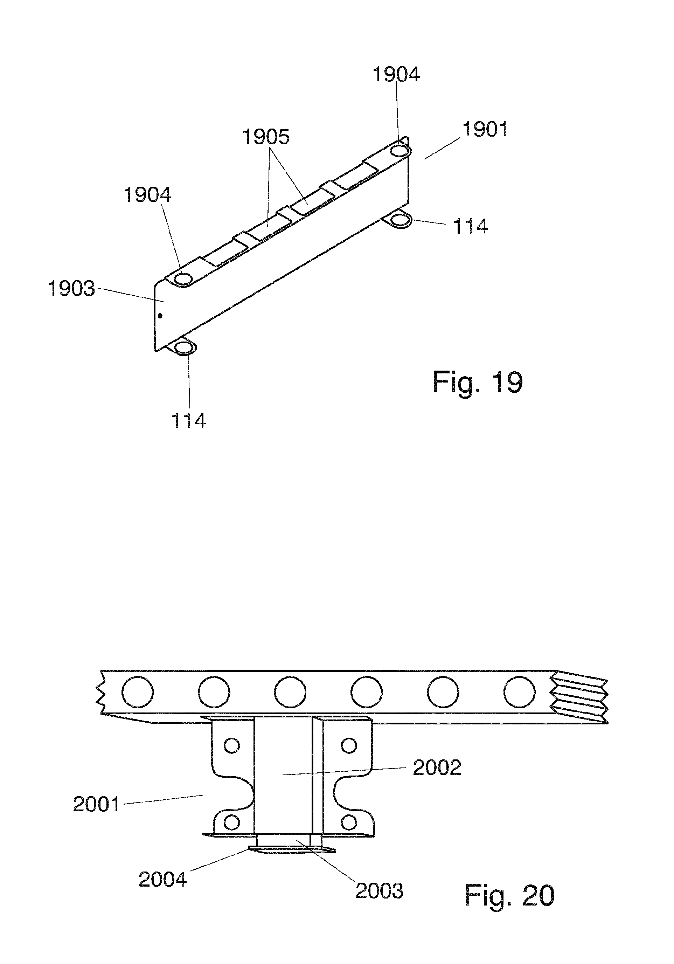

In Fig. 20 ist ein beispielhafter ausklappbarer Standfuß 2001 dargestellt, der aus einer Hülse 2002 und einem darin laufenden Innenteil 2003 besteht. Am Innenteil 2003 ist eine Bodenplatte 2004 angeordnet, die sich auf einem Untergrund abzustützen vermag. Das Innenteil 2003 kann mit der Hülse 2002 in verschiedenen Positionen verriegelt werden. Zumindest eine eingezogene und eine ausgefahrene Position sollte vorgesehen sein. Die Verriegelung kann durch eine nicht dargestellte Verrastung mit einem Federmechanismus, einem Sicherungssplint oder dergleichen erfolgen.

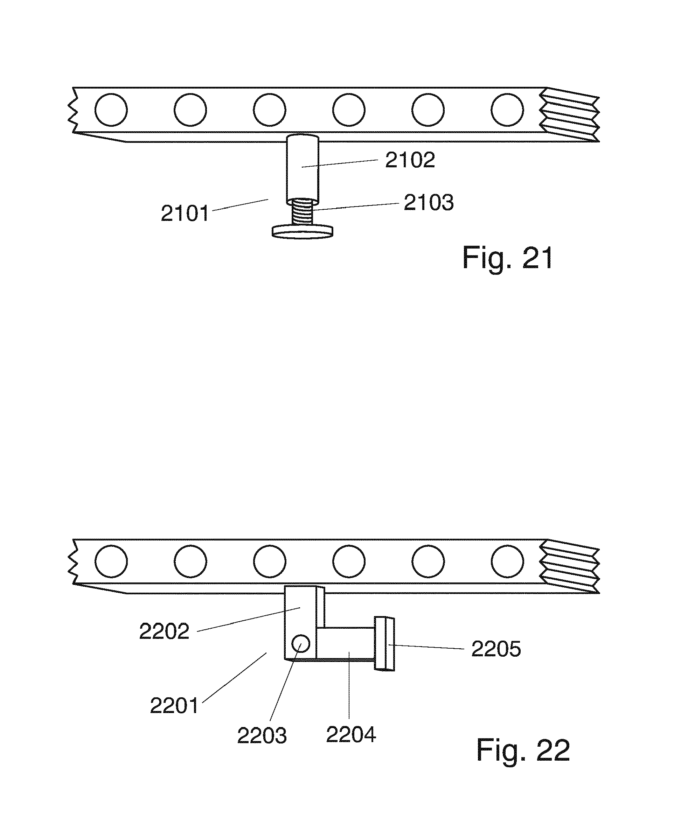

Alternativ oder in Kombination können derartige Standfüße auch ausdrehbar sein, wie dies in Fig. 21 dargestellt ist. Dort ist der Standfuß 2101 aus einer Gewindehülse 2102 und einem in diesem Gewinde laufenden Innenteil 2103 aufgebaut.

Ebenso sind Klappfüße 2201 denkbar, wie diese in Fig. 22 dargestellt sind. Hierbei werden feststehende Abschnitte 2202 an der Tragplatte angebracht. Über eine Drehgelenk 2203 ist ein Unterteil 2204 mit diesem festehenden Abschnitt 2202 verbunden. Am vom Drehgelenk 2203 abgewandten Ende des Unterteils 2204 ist eine Standplatte 2205 vorgesehen. Bei Bedarf wird das Unterteil 2204 ausgeklappt. Hierzu kann eine Arretierung vorgesehen sein, die das Unterteil in der eingeklappten und auch in der ausgeklappten Position sichert.

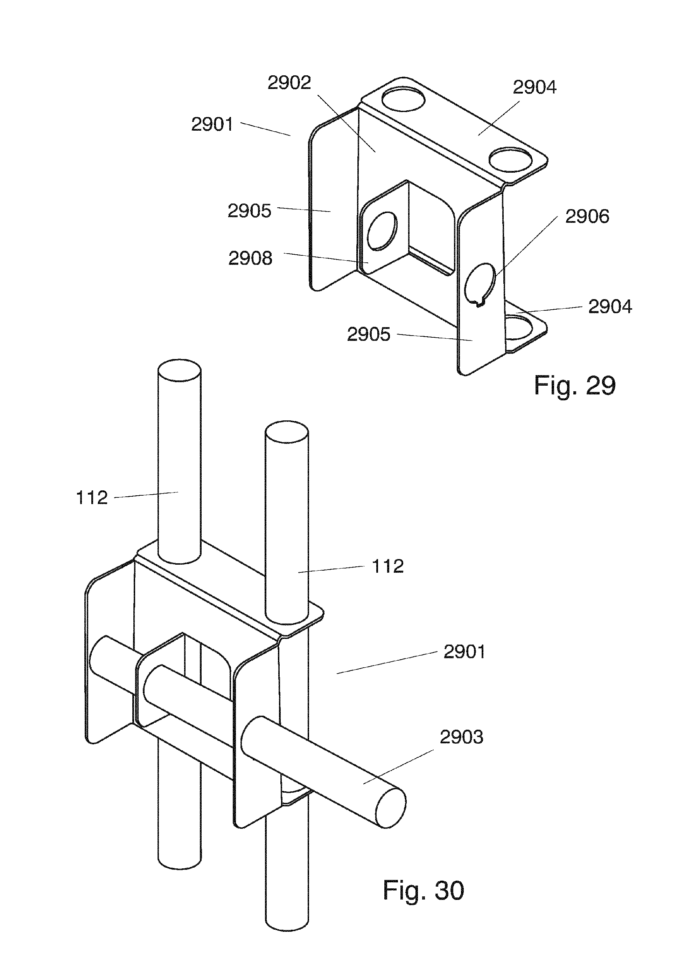

In den Fig. 29 bis 31 ist eine Aufnahme 2901 mit einem Mittelteil 2902 für ein Querrohr 2903 dargestellt, welche auf vertikale Rohre 112 aufgesteckt und mittels Laschen 2904 befestigt ist. Im vorliegenden Ausführungsbeispiel verbindet die Aufnahme 2901 zwei nebeneinander angeordnete vertikale Rohr 112 miteinander zu einem Windverband und sorgt so für eine sehr große Stabilität. Biegekräfte, die von der Belastung des Querrohres 2903 herrühren können so sehr gut in die vertikalen Rohre 112 eingeleitet werden.

Die Laschen 2904 können dabei, wie dargestellt, durchgehend, also zwei vertikale Rohre 112 verbindend, oder aber als Einzellaschen ausgeführt sein und sind vom Mittelteil aus abgekantet.

Zusätzlich sind Seitenstege 2905 vorgesehen, die ebenfalls vom Mittelteil 2902 ausgehend abgekantet sind, jedoch in die zu den Laschen 2904 entgegengesetzte Richtung weisen.

In wenigstens einem dieser Seitenstege 2905 ist eine Ausnehmung 2906 zum Durchstecken des Querrohres 2903 vorgesehen.

Diese Ausnehmung 2906 kann eine von der runden Form abweichende Form aufweisen, um das Durchstecken eines Arretierungsbolzens 2907 zu ermöglichen.

Ist im zweiten Seitensteg 2905 keine weitere Ausnehmung 2906 vorgesehen, so ist stattdessen eine zwischen den beiden Seitenstegen 2905 angeordnete Haltelasche 2908 vorgesehen, die aus dem Mittelteil 2902 herausgebogen ist. Der zweite Seitensteg 2905 dient dabei dann als Anschlag, der die Einstecklänge des Querrohres 2903 begrenzt.

Durch einfaches Verdrehen des Querrohres 2903 wird das Querrohr 2903 durch den Arretierungsbolzen 2907 fixiert und gegen unerwünschtes Herausziehen gesichert.

Die Ausnehmungen 2906 können leicht versetzt zueinander angeordnet sein, so daß das Querrohr 2903 gegenüber der Horizontalen geneigt angeordnet wird. In den Figuren ist eine steigende Anordnung vorgesehen, das heisst, die in der Haltelasche 2908 angeordnete Ausnehmung 2906 ist gegenüber der im Seitensteg 2905 angeordneten Ausnehmung 2906 etwas tiefer angeordnet. Andere Varianten sind denkbar.

Die Aufnahme 2901 kann auch mit anderen Elementen der Vorrichtung kombiniert werden und muss nicht, wie in den Fig. 29 bis 31 dargestellt, als Einzelelement eingesetzt werden.

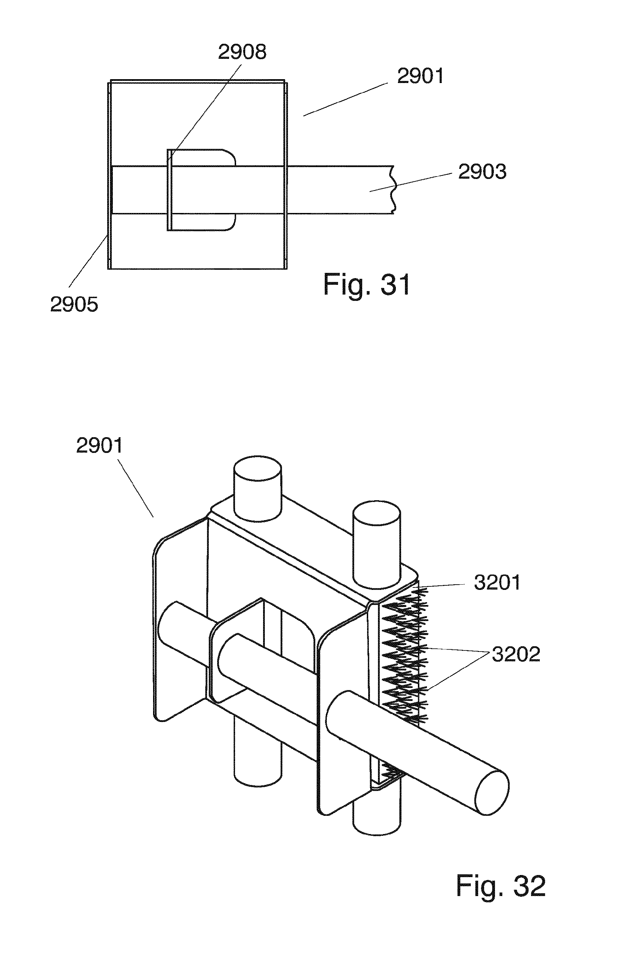

In Fig. 32 ist eine Bürste 3201 dargestellt, die in diesem Ausführungsbeispiel in eine Aufnahme 2901 eingesetzt ist und zwischen den Laschen 2904 in die Aufnahme 2901 eingesetzt ist und so als Anlegepunkt für zu lagernde oder zu transportierende Gegenstände dient. Die Bürste 3201 kann dabei in verschiedenen Ausgestaltungen vorgesehen sein, so daß diese in beliebige Elemente der erfindungsgemäßen Einrichtung horizontal oder vertikal eingesetzt werden kann.

Die Borsten 3202 der Bürste 3201 sorgen dafür, daß die Gegenstände nicht beschädigt werden. Zudem kann bei entsprechende weicher oder harter Ausgestaltung der Borsten 3202 auch eine Dämpfung erzielt werden.

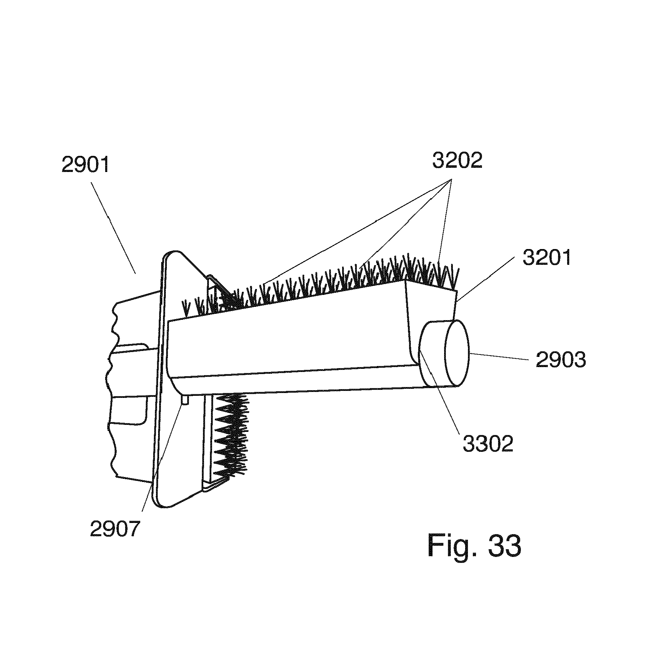

In Fig. 33 ist eine weitere Bürste 3301 dargestellt, die hier auf ein Querrohr 2903 aufgeschoben ist. Hierzu weist die Bürste 3301 eine entsprechende Öffnung 3302 auf, die über ein Rohr, nicht nur ein Querrohr 2903, sondern auch ein vertikales Rohr 118 geschoben werden kann. Dabei ist ein nicht dargestellter Klemmmechanismus denkbar, der ein unerwünschtes Verdrehen der Bürste 3301 auf dem Rohr verhindert.

Im einfachsten Fall kann der Klemmmechanismus durch eine entsprechend kleine Passung der Öffnung 3302 zu den Rohren 2903 bzw. 118 erreicht werden.

Zweckmäßigerweise werden für alle Rohre dieselben Durchmesser vorgesehen.

Borsten 3303 können, wie dargestellt, entlang einer tangentialen Fläche angeordnet sein. Eine umlaufende Anordnung ist ebenfalls denkbar.

## Patentansprüche

1. Flexible Transport- und Lagereinrichtung für Gegenstände und Gruppen von Gegenständen, die als Rohrsystem aufgebaut ist, **dadurch gekennzeichnet, daß** die Rohre gesteckt sind und durch einen sogenannten Windverband nebeneinander und/oder hintereinander angeordnete Rohre versteift und stabilisiert sind, wobei der Windverband durch auf die Rohre gesteckte Verbindungsteile hergestellt wird, wobei eine Tragplatte (1) vorgesehen sein kann, auf deren Unterseite Rollen, Füße, Stapleraufnahmen oder dergleichen angeordnet sein können, und wobei über die Tragplatte (1) eine Vielzahl von Durchbrechungen (2) und/oder Gewindebohrungen verteilt angeordnet sind, wobei im Bereich der Seitenkanten der Tragplatte (1) Wangen vorgesehen sein können, die nach unten ragen und die wiederum ebenfalls mit Durchbrechungen (2) und/oder Gewindebohrungen ausgerüstet sein können, die ebenfalls in einem vorgegebenen Raster angeordnet sein können, und daß in den Durchbrechungen (2) und/oder Gewindebohrungen Halte- bzw. Sicherungsmittel für die Gegenstände lösbar befestigt sind und daß die Rohre in die Durchbrechungen einsteckbar ausgebildet sind.

2. Einrichtung nach Anspruch 1, **dadurch gekennzeichnet, daß** der Windverband als Strebe, Tafel, Platte oder Wanne ausgebildet ist und Aufnahmen für die Rohre aufweist und daß die Aufnahmen für die Rohre als ausgebogene Laschen ausgebildet sein können und/oder wobei jeder Windverband an wenigstens zwei Rohren wenigstens jeweils zweimal angreift.

3. Einrichtung nach einem der vorangehenden Ansprüche, **dadurch gekennzeichnet, daß** die Rohre aus Innenrohren und Außenrohren zusammengesetzt sind.

4. Einrichtung nach einem der vorangehenden Ansprüche, **dadurch gekennzeichnet, daß** Steckbehälter vorgesehen sind, die aus einem Boden und separaten Seitenwänden in unterschiedlichen Höhen aufgebaut sind, wobei in die Rohre einhängbare Aufnahmen zur Aufnahme von Gütern vorgesehen sein können, und die Aufnahmen jeweils spezifisch auf das Gut abgestimmt sein können.

5. Einrichtung nach einem der vorangehenden Ansprüche, **dadurch gekennzeichnet, daß** mehrere Aufnahmen nebeneinander und/oder übereinander angeordnet sind und/oder daß Durchsteckböden vorgesehen sind, die in einem Raster oder anderweitig angeordnete Durchbrechungen aufweisen und/oder daß Aufnahmeschienen oder Aufnahmewinkel zur Aufnahme von Rohren vorgesehen sind, wobei diese Schienen oder Winkel auf die Grundplatte oder eine Aufnahme aufschraubbar und/oder in Rohre einhängbar ausgebildet sein können und/oder daß sogenannte Palettenecken bzw. Palettenzwischenstücke vorgesehen sind, die mit einem Ansatz in Ausnehmungen einsteckbar ausgebildet sind und eine oder mehrere Verdrehsicherungen aufweisen können, wobei die Verdrehsicherungen als weitere Ansätze ausgebildet sein können, die in weitere Ausnehmungen eingreifen.

6. Einrichtung nach einem der vorangehenden Ansprüche, **dadurch gekennzeichnet, daß** Einhängeschienen für Boxen oder dergleichen vorgesehen sind und/oder daß Aufnahmen für Rollen, Trommeln oder dergleichen vorgesehen sind, wobei die Aufnahmen mittels Laschen in Rohre einhängbar ausgebildet sind und wobei diese für Längs- oder Quereinhängung vorgesehen sein können.

7. Einrichtung nach einem der vorangehenden Ansprüche, **dadurch gekennzeichnet, daß** mehrere Einrichtungen miteinander verbindbar sind und/oder daß ein Element der Einrichtung derart ausgebildet ist, daß es mehrere Funktionen erfüllt.

8. Einrichtung nach einem der vorangehenden Ansprüche, **dadurch gekennzeichnet, daß** die Vorrichtung an ihrer Unterseite mit Fahrrollen, Standfüßen oder dergleichen ausgerüstet ist, wobei diese anbaubar, ausklappbar oder ausschraubbar ausgebildet sein können und/oder daß eine Zugdeichsel zum Verbinden zweier erfindungsgemäßer Einrichtungen vorgesehen ist, die jeweils in einer Durchbrechung der jeweiligen Einrichtung einhängbar ausgebildet ist, wobei die Zugdeichsel an einem oder beiden Enden gegen Verdrehen in der Durchbrechung gesichert sein kann und/oder wobei die Zugdeichsel ein Gelenk aufweisen kann, welches mindestens einen Freiheitsgrad aufweist, vorzugsweise drei Freiheitsgrade, wobei wenigstens ein Teil der Freiheitsgrade eingeschränkt sein kann und wobei die Zugdeichsel zweigeteilt ausgebildet sein kann, in eine Anhängekupplung und ein entsprechendes Zugmaul, wobei eine Ausgestaltung vorgesehen sein kann, bei der die Anhängekupplung als Kugelkopfkupplung und das Zugmaul als entsprechendes Gegenstück ausgebildet ist.

9. Einrichtung nach einem der vorangehenden Ansprüche, **dadurch gekennzeichnet, daß** eine Aufnahme für ein Querrohr vorgesehen ist, wobei diese Aufnahme ein oder mehr vertikale Rohre aufzunehmen vermag, wobei eine Rast- oder Arretiereinrichtung und/oder ein Anschlag zur Begrenzung der Einstecklänge des Querrohres und/oder der vertikalen Rohre vorgesehen sein kann.

10. Einrichtung nach Anspruch 9, **dadurch gekennzeichnet, daß** zwei Haltelaschen bzw. Öffnungen für das Querrohr und/oder das bzw. die vertikalen Rohre zueinander versetzt angeordnet sind, so daß das jeweilige Rohr bzw. die Aufnahme geneigt angeordnet wird.

11. Einrichtung nach einem der vorangehenden Ansprüchen, **dadurch gekennzeichnet, daß** Bürsten oder dergleichen vorgesehen sind, die einsetzbar und/oder aufsteckbar ausgebildet sein können.

12. Einrichtung nach Anspruch 11, **dadurch gekennzeichnet, daß** die Bürsten in Halter oder andere Bauteile einsetzbar bzw. an diesen befestigbar ausgebildet sind.

13. Einrichtung nach Anspruch 11 oder 12, **dadurch gekennzeichnet, daß** die Bürsten auf Rohre, insbesondere auf Querrohre aufsteckbar bzw. an diesen befestigbar ausgebildet sind.
